# FASCICULE DE BREVET EUROPEEN

(11) **EP 4 379 139 B1**
(45) Date de publication et mention de la délivrance du brevet: **06.08.2025**
(21) Numéro de dépôt: 22306779.4
(22) Date de dépôt: 02.12.2022
(51) Int. Cl.: E01C 19/20, E01C 19/21, E01C 23/06, G01F 11/24

(54) **UNITÉ MOBILE DE CONFECTION ET/OU RÉPARATION D'UN REVÊTEMENT ROUTIER**
MOBILE EINHEIT ZUR HERSTELLUNG UND/ODER REPARATUR EINER STRASSENOBERFLAECHE
MOBILE UNIT FOR BUILDING AND/OR REPAIRING A ROAD SURFACE

(43) Date de publication de la demande: 05.06.2024
(73) Titulaire: SECMAIR, 53230 Cosse-le-Vivien (FR)
(72) Inventeur: PARAGE, Gilles, 53000 Laval (FR)
(74) Mandataire: Regimbeau

(56) Documents cités:
- EP-A1- 1 435 412
- EP-A2- 1 640 501
- FR-A- 718 646
- JP-A- 2001 323 409

## Description

L'invention concerne une unité mobile de confection et/ou de réparation d'un revêtement routier.

Une unité mobile de confection et/ou réparation d'un revêtement routier est connue de JP 2001 323409 A.

Cette unité mobile peut être un matériel du type bi-répandeur destiné à être installé sur un porteur routier, par exemple en étant monté sur un châssis roulant ou analogue, ce châssis étant lui-même automobile ou pouvant être également tracté.

Un objectif d'invention et d'obtenir une unité permettant d'épandre des granulats de petite taille (gravillons ou sable), notamment de 0.2 à 0.6 mm de granulométrie.

L'une des difficultés est le dosage précis de la quantité de granulats épandus ayant cette granulométrie de petite taille.

Or, un épandage trop important des granulats par rapport à la quantité souhaitée provoque un gaspillage des granulats, ce qui est pénalisant tant du point de vue écologique qu'économique.

En outre, trop peu de granulats épandus par rapport à la quantité souhaitée ne permet pas de réparer correctement le revêtement routier.

Un objectif de l'invention est d'obtenir une unité mobile de confection et/ou réparation d'un revêtement routier, ainsi qu'un kit muni de celle-ci, qui résolve le problème mentionné ci-dessus pour pouvoir contrôler précisément l'épandage de granulats de petite taille.

A cet effet, un premier objet de l'invention est une unité mobile de confection et/ou réparation d'un revêtement routier composé d'une couche de liant et d'une couche de granulats, l'unité comprenant :
un châssis, sur lequel sont montés un récipient de stockage de granulats, une cuve de stockage de liant, un ensemble de distribution de liant et un ensemble de distribution de granulats,
l'ensemble de distribution de granulats comportant une pluralité de trappes, qui sont réparties dans la direction de la largeur du châssis sur respectivement une pluralité de plages prescrites de largeur et qui sont chacune aptes à être sélectivement déplacées soit dans une position ouverte selon une commande d'épandage pour épandre des granulats vers le bas dans la plage prescrite de largeur associée à la trappe, soit dans une position fermée selon une commande d'absence d'épandage pour ne pas épandre de granulats dans la plage prescrite de largeur associée à la trappe,
l'ensemble de distribution de liant étant apte à épandre du liant dans la plage prescrite de largeur selon la commande d'épandage et à ne pas épandre de liant dans la plage prescrite de largeur selon la commande d'absence d'épandage,
l'ensemble de distribution de granulats comportant :
   - un cylindre rotatif de dosage et de déversement des granulats vers le sol, qui comporte des évidements de réception de granulats et qui s'étend en commun de la pluralité des plages prescrites de largeur, les évidements de réception de granulats affleurant à une surface périphérique extérieure du cylindre rotatif de dosage et de déversement des granulats vers le sol,
   - une lame de retenue de granulats, s'étendant en commun de la pluralité des plages prescrites de largeur, en aval de la pluralité des trappes, le cylindre rotatif de dosage étant situé sous la lame,
   - au moins une brosse de lissage de la surface périphérique extérieure du cylindre rotatif, qui est fixée en saillie à la lame de lissage vers le cylindre rotatif de dosage et qui s'étend en commun de la pluralité des plages prescrites de largeur,
   - un dispositif d'entraînement en rotation du cylindre rotatif de dosage des granulats, comportant un variateur de vitesse permettant de faire varier la vitesse de rotation du cylindre rotatif de dosage des granulats,
   - un mécanisme de contrainte relié à la lame de lissage pour que la brosse de lissage soit appliquée contre la surface périphérique extérieure du cylindre rotatif de dosage des granulats en position de déversement des granulats vers le sol depuis le cylindre rotatif de dosage.

Grâce à l'invention, l'unité mobile permet d'épandre une couche de granulats ultra-mince du fait de la taille des granulats et d'une manière contrôlable dans la quantité souhaitée pour prolonger la durée de vie de la chaussée. D'un point de vue écologique, la quantité d'énergie requise pour l'épandage est très faible, une quantité peu importante de granulats est à préparer et à transporter sur le chantier, et peu de machines sont mises en jeu. Le dosage des granulats se fait par contrôle de la vitesse de rotation du cylindre rotatif de déversement des granulats vers le sol. Ce dosage est contrôlé d'une manière fine par le variateur de vitesse de rotation du cylindre rotatif de déversement des granulats et par les évidements permettant d'extraire une épaisseur constante de granulats. L'unité peut notamment être utilisée pour effectuer des maintenances routières et régénérer des revêtements routiers sur une chaussée par épandage de granulats.

Suivant un mode de réalisation de l'invention, les évidements de réception de granulats sont répartis suivant plusieurs positions angulaires autour d'un deuxième axe de rotation du cylindre rotatif de dosage et de déversement des granulats.

Suivant un mode de réalisation de l'invention, les évidements de réception de granulats sont répartis suivant plusieurs positions axiales le long d'un deuxième axe de rotation du cylindre rotatif de dosage et de déversement des granulats.

Suivant un mode de réalisation de l'invention, le mécanisme de contrainte comporte au moins un levier mené, qui est apte à tourner autour d'un premier axe de rotation et sur lequel est fixée la lame située à une première distance non nulle du premier axe de rotation,
un vérin de poussée du levier mené, pour que la brosse de lissage soit appliquée contre la surface périphérique extérieure du cylindre rotatif de dosage des granulats.

Suivant un mode de réalisation de l'invention, la brosse de lissage fait saillie sous un bord inférieur de la lame de retenue de granulats.

Suivant un mode de réalisation de l'invention, la surface périphérique extérieure du cylindre rotatif de dosage des granulats comporte un rouleau cylindrique rotatif et une tôle, qui forme la surface extérieure périphérique du cylindre rotatif de dosage des granulats, qui comporte des perforations formant les évidements de réception des granulats et qui est fixée sur le rouleau cylindrique rotatif.

Suivant un mode de réalisation de l'invention, les évidements de réception de granulats du cylindre rotatif de dosage ont une profondeur inférieure ou égale à 1 mm dans sa surface périphérique extérieure.

Suivant un mode de réalisation de l'invention, le dosage massique des granulats déversés vers le sol depuis le cylindre rotatif de dosage est proportionnel à la vitesse de rotation du cylindre rotatif de dosage des granulats, imposée par le variateur de vitesse.

Suivant un mode de réalisation de l'invention, pour une granulométrie des granulats supérieure ou égale à 0.2 mm et inférieure ou égale à 0.6 mm, les évidements de réception de granulats du cylindre rotatif de dosage ont une profondeur supérieure ou égale à 0,5 mm et inférieure ou égale à 1 mm ou 2 mm dans la surface périphérique extérieure, et/ou un écartement entre eux le long de l'axe de rotation du cylindre rotatif de dosage, supérieure ou égale à 1 mm et inférieur ou égale à 1 cm dans la surface périphérique extérieure, et/ou, transversalement à leur profondeur, leur plus grande dimension supérieure ou égale à 1 mm et inférieure ou égale à 5 mm, et/ou, transversalement à leur profondeur, leur longueur le long de l'axe de rotation du cylindre rotatif de dosage, supérieure ou égale à 1 mm et inférieure ou égale à 5 mm, et/ou, transversalement à leur profondeur, leur largeur autour de de l'axe de rotation du cylindre rotatif de dosage, supérieure ou égale à 1 mm et inférieure ou égale à 5 mm, et/ou sur la surface périphérique extérieure une densité des évidements, qui est supérieure ou égale à 5 % et inférieure ou égale à 50 %, notamment supérieure ou égale à 20 % et inférieure ou égale à 40 % et/ou la surface périphérique extérieure du cylindre rotatif de dosage a un rayon par rapport à son axe de rotation, qui est supérieur ou égal à 50 mm et qui est inférieur ou égale à 500 mm.

Suivant un mode de réalisation de l'invention, la vitesse de rotation du cylindre autour de son axe de rotation est supérieure ou égale à 20 tours par minute et inférieure ou égale à 80 tours par minute, notamment supérieure ou égale à 40 tours par minute et inférieure ou égale à 60 tours par minute, pour une granulométrie des granulats supérieure ou égale à 0.2 mm et inférieure ou égale à 0.6 mm.

Suivant un mode de réalisation de l'invention, l'ensemble de distribution de granulats comporte une traverse de butée pour la butée haute de la pluralité des trappes dans leur position ouverte.

Suivant un mode de réalisation de l'invention, la pluralité des trappes occupe une largeur totale déterminée,
la traverse de butée s'étendant au moins sur la largeur totale déterminée de la pluralité des trappes.

Suivant un mode de réalisation de l'invention, les trappes sont aptes à passer entre l'une et l'autre de la position ouverte de la position fermée par rotation autour du premier axe (120) de rotation.

Suivant un mode de réalisation de l'invention, l'ensemble de distribution de granulats comporte une barre arrière s'étendant suivant la direction de la largeur, le châssis comporte au moins une roulette, qui est en appui contre et derrière la barre arrière, un ancrage ajustable de la roulette par rapport au châssis étant prévu.

Suivant un mode de réalisation de l'invention, les trappes sont côte à côte le long de la direction de la largeur et ont, sur leurs flancs transversaux à la direction de la largeur, des deuxièmes brosses de retenue des granulats.

L'invention sera mieux comprise à la lecture de la description qui va suivre, donnée uniquement à titre d'exemple non limitatif en référence aux figures ci-dessous des dessins annexés.
La figure 1 représente schématiquement en vue de côté une unité mobile de confection et/ou de réparation d'un revêtement routier suivant un mode de réalisation de l'invention.
Les figures 2 et 3 représentent schématiquement en vue de dessus des ensembles de distribution de granulats et de liant unité mobile de confection et/ou de réparation d'un revêtement routier suivant des modes de réalisation de l'invention.
La figure 4 représente schématiquement une vue en perspective d'une unité mobile de confection et/ou de réparation d'un revêtement routier suivant des modes de réalisation de l'invention.
La figure 5 représente schématiquement une vue en coupe verticale d'un cylindre de déversement de granulats suivant des modes de réalisation de l'invention.
La figure 6 représente schématiquement une vue en coupe axiale d'un cylindre de déversement de granulats suivant des modes de réalisation de l'invention.
La figure 7 représente schématiquement en vue de gauche une partie d'une unité mobile de confection et/ou de réparation d'un revêtement routier suivant des modes de réalisation de l'invention.
Les figures 8 et 9 représentent schématiquement en perspective une partie d'une unité mobile de confection et/ou de réparation d'un revêtement routier suivant des modes de réalisation de l'invention.

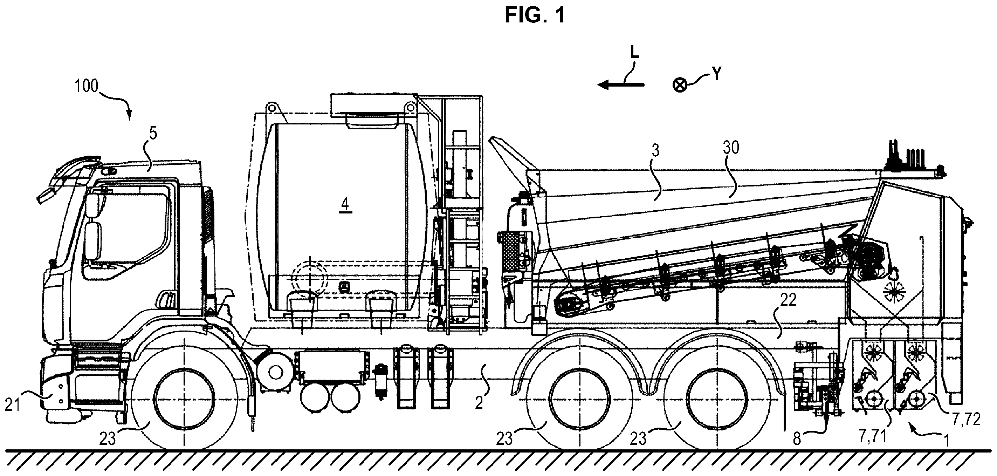

Aux figures 1 à 9, l'unité 1 de réparation d'une chaussée comporte un châssis 2, sur lequel sont montés un récipient 3 de stockage de granulats (pouvant comporter une benne 30 ou trémie 30 à granulats) et une cuve 4 de stockage de liant, pouvant être une citerne à liant (le liant pouvant être une émulsion, ou du bitume, ou un liant de synthèse). Les granulats peuvent être des gravillons, ou du sable ou autre. Le châssis 2 comporte un côté avant 21 et un côté arrière 22.

Suivant un mode de réalisation représenté à la figure 1, l'unité 1 de réparation d'une chaussée est mobile sur cette chaussée, par exemple roulante à l'aide de roues 23 de roulement sur la chaussée, qui sont montées rotatives sous le châssis 2. Par exemple, ainsi que représenté à la figure 1, l'unité 1 peut faire partie d'une machine automotrice porteuse 100, par exemple du type camion, permettant d'amener l'unité 1 de réparation à proximité de la zone Z de la chaussée à traiter. Le châssis 2 est destiné à être déplacé dans un sens d'avancée de l'arrière vers l'avant sur la chaussée. Bien entendu, le châssis 2 pourrait être déplacé dans le sens d'avancée ou dans le sens inverse. Du côté avant 21 du châssis 2 est prévue une cabine 5 de pilotage permettant à l'utilisateur de commander le moteur d'avancement du châssis 2 sur la chaussée, pour piloter et diriger le véhicule 100 comprenant le châssis 2 ainsi que pour piloter l'unité 1.

Dans le mode de réalisation représenté aux figures, la machine automotrice 100 est par exemple une machine 100 du type bi-répandeur ou répandeur gravillonneur synchrone. L'unité 1 mobile de confection et/ou réparation sert à épandre un revêtement routier composé d'une couche de liant et d'une couche de granulats (gravillons ou sable ou autre) sur la chaussée. Dans ce cas, l'unité 1 comporte du côté arrière 22 un ensemble 7 ou rampe 7 de distribution de granulats ou gravillonneur 7 et un ensemble 8 ou rampe 8 de distribution du liant, qui s'étendent au moins sur une largeur comprenant le côté arrière 22 (la largeur étant prise selon la direction latérale Y, horizontale et transversale à la direction longitudinale L allant du côté arrière 22 au côté avant 21), cette direction Y de la largeur allant de la gauche vers la droite. L'ensemble 8 de distribution du liant peut par exemple être situé en avant de l'ensemble 7 de distribution de granulats.

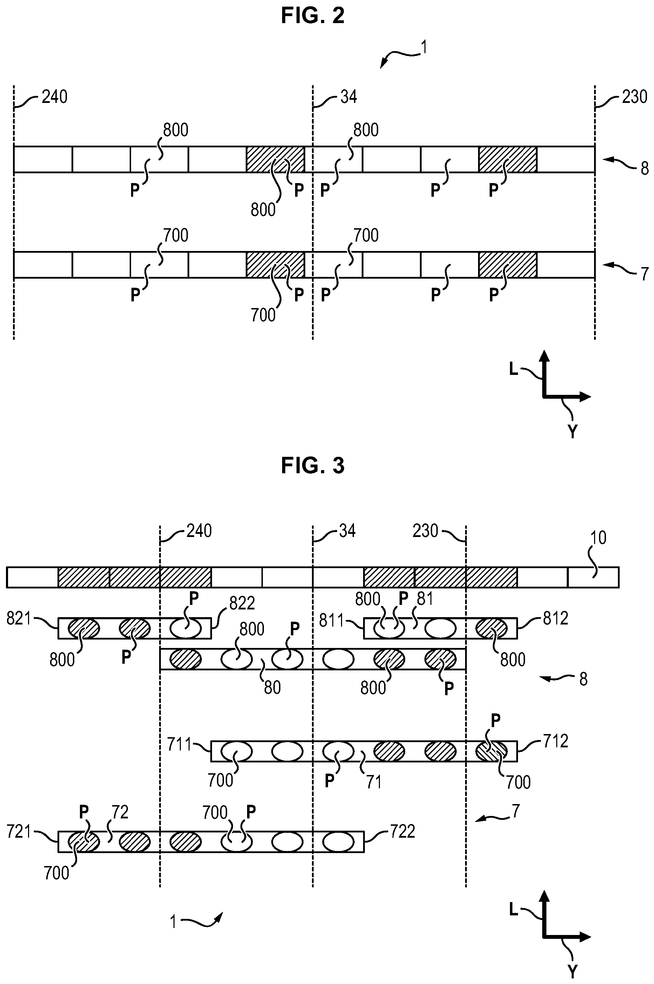

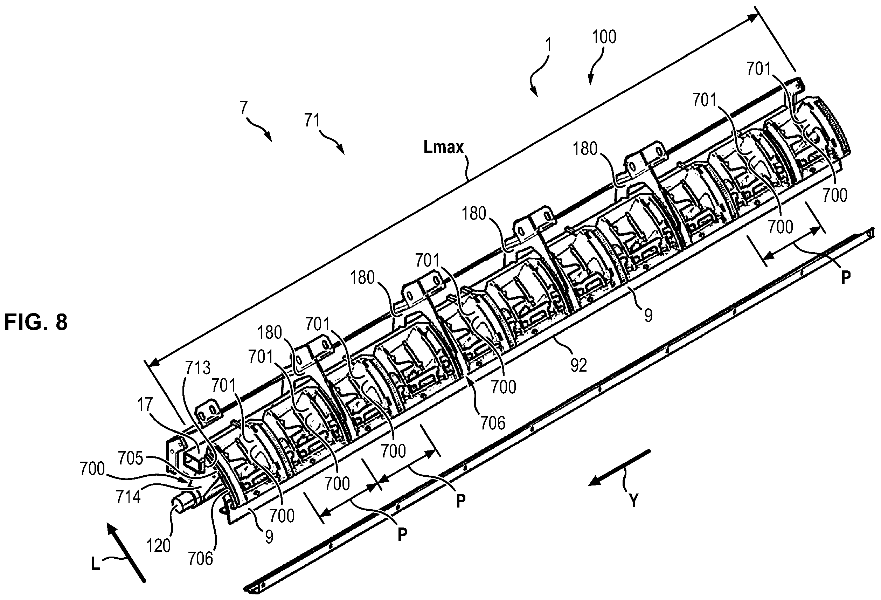

Ainsi que représenté aux figures 2, 3, 8 et 9, l'ensemble 7 de distribution de granulats et l'ensemble 8 de distribution du liant sont configurés pour pouvoir distribuer des granulats et du liant sur une ou plusieurs plages de largeur sélectionnées d'épandage parmi plusieurs plages prescrites P de largeur dans une plage maximum prescrite Lmax et pendant un temps sélectionné associé à chaque plage sélectionnée, selon une consigne d'épandage localisé. Chaque plage P peut avoir une même largeur de pas prescrite dans la direction Y de la largeur, pouvant être comprise entre 40 cm et 10 cm, et par exemple égale à 20 cm. Le pas minimum de distribution de granulats et de liant en longueur peut être par exemple compris entre 1 cm et 20 cm, par exemple égal à 5 cm. Chaque plage prescrite P de largeur de l'ensemble 7 de distribution de granulats est délimitée par une trappe 700 s'étendant dans cette plage prescrite P de largeur, une pluralité de trappes étant réparties dans la direction Y de la largeur. Les trappes 700 occupent donc en tout la largeur totale déterminée Lmax. Chaque trappe 700, peut, et ce indépendamment des autres trappes 700 des autres plages prescrites P d'épandage, être sélectivement déplacée soit dans une position ouverte laissant passer des granulats vers le bas dans la plage prescrite P de largeur associée à cette trappe 700 dans un conduit 702 de passage des granulats dans l'ensemble 7 de distribution des granulats pour épandre des granulats vers le bas selon une commande d'épandage, soit dans une position fermée pour obturer dans cette plage prescrite P de largeur le conduit 702 de passage des granulats dans l'ensemble 7 de distribution des granulats et ne pas en épandre de granulats dans cette plage prescrite P de largeur selon une commande d'absence d'épandage. Le temps d'ouverture de chaque trappe est déterminé en fonction du temps sélectionné et/ou longueur sélectionnée d'épandage et de la vitesse V d'avancée de l'unité mobile 1 suivant la direction L d'avancée. Chaque trappe 700 peut comporter un volet 701 d'obturation des granulats, pouvant être par exemple en forme de secteur de cylindre circulaire, et mobile dans le conduit 702 de passage des granulats. Les volets 701 d'obturation sont représentés en transparence à la figure 8. Les trappes 700 et les plages prescrites P être côte à côte le long de la direction Y de la largeur.

Suivant un mode de réalisation de l'invention, les trappes 700 sont aptes à être déplacées entre l'une et l'autre de la position ouverte de la position fermée par rotation autour d'un axe de rotation, qui est donc commun à la pluralité des trappes 700 et à la pluralité des plages prescrites P.

Suivant un mode de réalisation de l'invention, chaque trappe 700 peut être déplacée entre l'une et l'autre de sa position ouverte et de sa position fermée par un vérin 709. Il y a donc une pluralité de vérins 709 permettant de déplacer individuellement la pluralité de trappes 700. Chaque trappe 700 comporte un bras 714, dont une première partie d'extrémité est montée rotative autour de l'axe de rotation de la trappe 700 et dont une deuxième partie d'extrémité est fixée au volet 701 ou solidaire du volet 701 à distance de l'axe de rotation de la trappe 700. Le vérin 709 comporte une tige 7091 montée coulissante d'une manière commandable par rapport à un fût 7092 du vérin 709. La tige 7091 du vérin 709 a son extrémité 7093 reliée au bras 714 en un point situé entre l'axe 120 de rotation de la trappe 700 et le volet 701. Le fût 7092 du vérin 709 (par exemple l'extrémité 7094 du fût 709 du vérin 709, qui est la plus éloignée de l'extrémité 7093 de la tige 7091) est relié par une articulation (boulonnage ou autre) à un autre axe 7095 de rotation prévu dans l'ensemble 7. Dans sa position ouverte, le bras 714 de la trappe 700 bute contre la traverse 17 de butée. Le bras 714 peut comporter dans sa partie supérieure, tournée vers la traverse 17 de butée, une encoche 713 ayant une forme complémentaire (par exemple ayant deux bords rectilignes à angle droit) par rapport à celle de la traverse 17 de butée (pouvant être par exemple de section rectangulaire ou carrée).

L'ensemble 8 de distribution de liant est apte à épandre du liant sélectivement dans chaque plage prescrite P de largeur selon la commande d'épandage et à ne pas épandre de liant sélectivement dans chaque prescrite P de largeur selon la commande d'absence d'épandage. Suivant un mode de réalisation de l'invention, chaque plage prescrite P de largeur de l'ensemble 8 de distribution du liant est délimitée par une buse de distribution de liant vers le bas s'étendant dans cette plage prescrite P de largeur, une pluralité de buses étant réparties dans la direction Y de la largeur et étant chacune aptes à être sélectivement ouverte pour épandre du liant vers le bas dans la plage prescrite P de largeur associée à cette buse et fermée pour ne pas en épandre dans cette plage prescrite P de largeur, et ce indépendamment des autres buses des autres plages prescrites P d'épandage. Le temps d'ouverture de chaque buse est déterminé en fonction du temps sélectionné et/ou longueur sélectionnée d'épandage et de la vitesse V d'avancée.

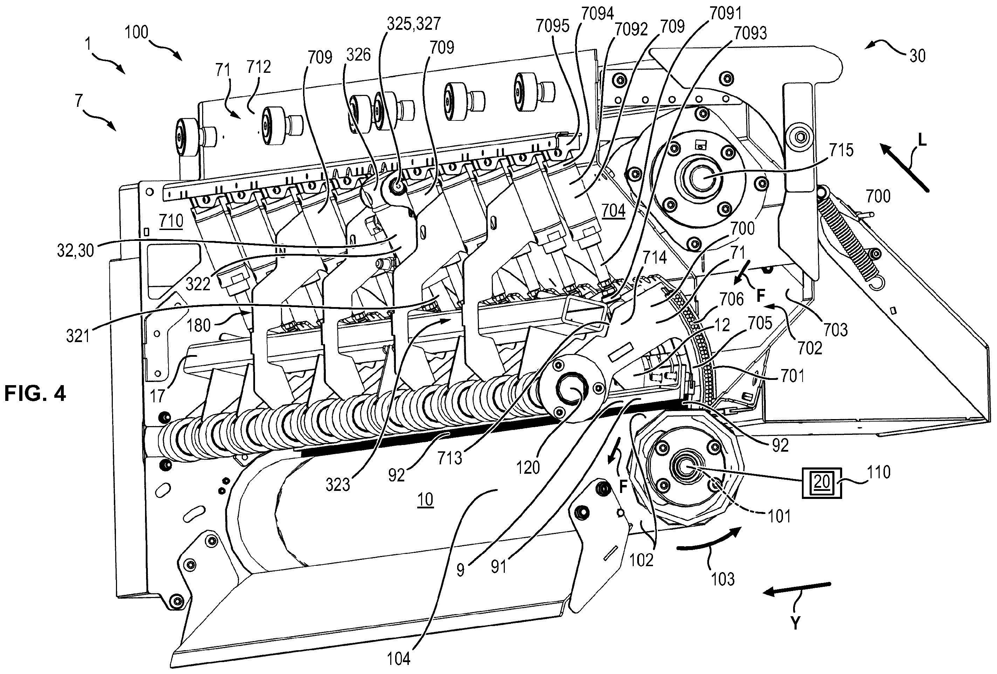

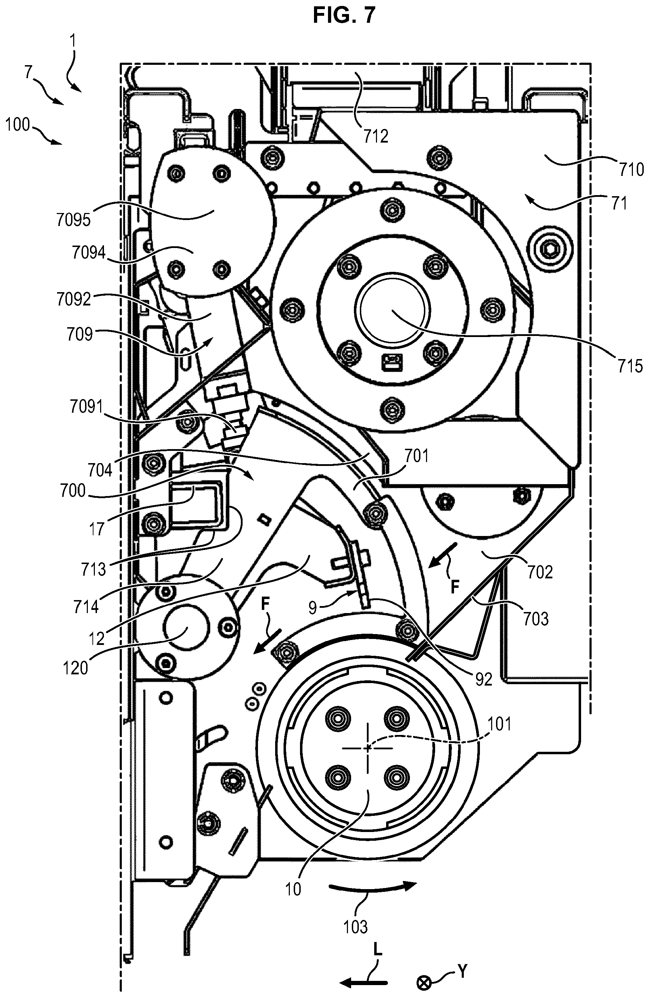

Suivant un mode de réalisation de l'invention, l'ensemble 7 ou rampe 7 de distribution de granulats comportant les trappes 700 et l'ensemble 8 ou rampe 8 de distribution du liant sont à gabarit fixe en largeur (largeur totale déterminée Lmax), compris dans le gabarit routier du châssis 2 ou du véhicule 100, figuré par des plans verticaux droit 230 et gauche 240 de part et d'autre du plan médian 34 comme par exemple représenté à la figure 2. L'ensemble 7 ou rampe 7 de distribution de granulats comporte dans ce cas un caisson 710 (représenté par exemple à la figure 7) fixé au châssis 2 et comportant les éléments décrits ci-dessous en référence aux figures 4 à 9. Le caisson 710 peut comporter une vis 715 rotative d'amenée des granulats depuis une ouverture supérieure 712 de réception des granulats depuis le récipient 3 de stockage des granulats vers les trappes 700.

Suivant un autre mode de réalisation de l'invention, dit à coulissement, représenté aux figures 1, 2, 3 et 9, le premier ensemble 7 de distribution de granulats et le deuxième ensemble 8 de distribution de liant sont déformables transversalement, c'est-à-dire en largeur, pour avoir un gabarit variable au cours du travail de l'unité 1, c'est-à-dire pendant que le châssis 2 est déplacé sur la chaussée longitudinalement vers l'avant. Par exemple, le premier ensemble 7 de distribution de granulats comporte deux parties 71, 72 de distribution de granulats vers le sol qui sont chacune mobile en largeur, par rapport au châssis 2 et sont disposées l'une derrière l'autre. Chacune des deux parties 71, 72 a un gabarit en largeur (largeur totale déterminée Lmax) sensiblement égal ou inférieur au gabarit routier du châssis 2, figuré par des plans verticaux droit 23 et gauche 24 à la figure 3. Le gabarit routier du châssis 2 et du véhicule bi-répandeur 100 est habituellement égal à un gabarit standard de 2,50 m, pour qu'en position de repos des ensembles 7, 8 de distribution, le véhicule puisse rouler sur le réseau routier et être amené sur la chaussée à revêtir. Dans l'exemple représenté aux figures 2 et 3, chaque partie 71, 72 de distribution de granulats a une largeur de travail de 2,40 m environ. Chaque partie 71, 72 de distribution de granulats comporte une position rentrée, dans laquelle son encombrement en largeur est compris dans le gabarit du châssis 2.

Des moyens, par exemple à vérin, sont prévus pour déplacer dans les deux sens de la direction Y de la largeur chaque partie 71, 72 de distribution de granulats par rapport au châssis 2. Chaque partie 71, 72 de distribution de granulats peut être montée coulissante dans les deux sens de la direction Y de la largeur sur un (ou plusieurs) rail, non représenté, fixé au châssis 2 (par exemple en étant suspendue au rail). Chaque partie 71, 72 de distribution de granulats peut comporter respectivement un caisson 710, 720 comportant les éléments décrits ci-dessous en référence aux figures 4 à 9, chaque caisson 710, 720 étant monté coulissant dans les deux sens de la direction Y de la largeur par rapport au châssis 2. Chaque caisson 710, 720 peut être analogue au caisson 710 représenté à la figure 7.

Chaque partie 71, 72 de distribution de granulats est apte à être déplacée entre la première position extrême rentrée dans le gabarit routier du châssis 2, et une deuxième position extrême de sortie maximale vers l'extérieur, dans laquelle elle dépasse en largeur respectivement du côté droit et du côté gauche du châssis 2 vu de l'arrière, la partie mobile 71 de distribution de granulats étant active par exemple dans ses différentes positions à droite du plan vertical médian 34 du châssis 2, tandis que la partie mobile gauche 72 de distribution de granulats est active à gauche du plan médian 34 dans ses différentes positions. La partie mobile 71 de distribution de granulats peut être prévue plus en avant que la partie mobile 72 de distribution de granulats, ainsi que représenté aux figures 1, 2 et 3, mais cela pourrait être l'inverse. Entre ces deux positions extrêmes, chaque partie 71, 72 de distribution de granulats est apte à occuper plusieurs positions intermédiaires, dans lesquelles elle dépasse du côté droit, respectivement gauche du châssis 2. Dans la deuxième position extrême de sortie maximale vers l'extérieur des parties 71, 72, leur extrémité intérieure, c'est-à-dire l'extrémité gauche 711 de la partie droite 71 et l'extrémité droite 722 de la partie gauche 72, ne dépasse pas le plan longitudinal vertical médian 34 du châssis 2. Par exemple, chaque partie 71, 72 est déplaçable d'une largeur de plus de 20 % du gabarit du châssis entre les positions extrêmes, par exemple de 1 m environ. Dans l'exemple numérique précédent, le gabarit du premier ensemble 7 de distribution de granulats peut donc varier entre une largeur de 2,40 m et 4,4 m. Les parties 71, 72 de distribution de granulats comportent chacune une rangée de trappes 700 réparties dans la direction Y de la largeur, qui peuvent chacune être commandées sélectivement pour envoyer ou ne pas envoyer des granulats vers le sol, ainsi que cela est représenté par des ovales respectivement pleins et vides à la figure 3. La largeur maximum de travail de chaque partie mobile 71, 72, définie entre les extrémités droite 712, 722 et gauche 711, 721, est celle définie par leur rangée de trappes 700.

Suivant le mode de réalisation de l'invention à coulissement, représenté aux figures 1, 2, 3 et 9, le deuxième ensemble 8 de distribution de liant comporte une partie centrale fixe 80 de gabarit inférieur ou sensiblement égal au gabarit du châssis 2, et deux parties mobiles 81, 82 de distribution de liant à droite, respectivement à gauche, qui ont chacune un gabarit inférieur à celui du châssis 2 et sont prévues derrière ou comme représenté devant la partie fixe 80. Chaque partie 81, 82 de distribution de liant possède une position rentrée, dans laquelle son encombrement est situé dans celui du châssis 2. Des moyens, par exemple à vérin, sont prévus pour déplacer en largeur chaque partie 81, 82 de distribution de liant par rapport au châssis 2. Chaque partie 81, 82 de distribution de liant est apte à être déplacée dans les deux sens de la direction Y de la largeur entre une première position extrême rentrée, correspondant par exemple à la position de repos et une deuxième position extrême sortie, dans laquelle elle dépasse en largeur respectivement du côté droit et du côté gauche du châssis 2 vu de l'arrière. Entre ces deux positions extrêmes, chaque partie 81, 82 de distribution de liant est apte à occuper plusieurs positions intermédiaires, dans lesquelles elle dépasse du côté droit, respectivement gauche du châssis 2. Dans la deuxième position extrême sortie des parties 81, 82, leur extrémité intérieure, c'est-à-dire l'extrémité gauche 811 de la partie droite 81 et l'extrémité droite 822 de la partie gauche 82, ne dépasse pas le plan longitudinal vertical droit 230, respectivement gauche 240 du châssis 2 et se trouve par exemple en deçà dans la moitié droite, respectivement gauche de celui-ci. Les deuxièmes positions extrêmes des parties 81, 82 de distribution de liant correspondent à celles des parties 71, 72 de distribution de granulats, les ensembles 7 et 8 de distribution de granulats et de liant ayant sensiblement le même gabarit maximum en largeur. Les parties 80, 81, 82 de distribution de liant comportent une pluralité de buses 800 de projection de liant vers le sol, qui sont réparties en largeur, qui sont reliées par des canalisations à une ou plusieurs pompes à liant alimentées par la ou les cuve(s) 4 et qui peuvent chacune être commandées sélectivement pour projeter ou ne pas projeter de liant. La largeur maximum de travail de chaque partie mobile 81, 82, définie entre les extrémités droite 812, 822 et gauche 811, 821, est celle définie par leur rangée de buses 800.

Bien entendu, l'unité 1 de réparation peut faire partie d'une machine automotrice 100 n'étant pas du type bi-répandeur, ni du type répandeur gravillonneur synchrone. L'unité 1 de réparation peut également être prévue sur une remorque devant être tractée par un véhicule automoteur sur la chaussée.

Ainsi que représenté à titre d'exemple non limitatif aux figures 4, 5 et 6, suivant l'invention, l'ensemble 7 de distribution de granulats comporte un cylindre 10 rotatif de dosage et de déversement des granulats vers le sol. Le cylindre 10 rotatif de dosage et de déversement des granulats vers le sol comporte des évidements 104 (ou orifices 104) de réception de granulats affleurant à sa surface périphérique extérieure 102. Les évidements 104 sont des trous borgnes sur le cylindre 10 et ont donc un fond sous la surface périphérique extérieure 102.

L'ensemble 7 de distribution de granulats comporte une lame 9 de retenue de granulats, en aval des trappes 700 dans le sens d'écoulement des granulats 7 de haut en bas, représenté par les flèches F aux figures 4 et 7. Le cylindre 10 rotatif de dosage et de déversement des granulats est situé sous la lame 9 de retenue de granulats. La lame 9 permet de laisser passer des granulats envoyés par chaque trappe 700 dans la position ouverte de cette trappe 700. La lame 9 est par exemple métallique.

L'ensemble 7 de distribution de granulats comporte une (ou plusieurs) brosse 92 (ou balai 92 ou racloir 92 ou bavette 92) de lissage de la surface périphérique extérieure 102 du cylindre 10 rotatif, qui est fixée en saillie à la lame 9 de lissage vers le cylindre 10 rotatif de dosage. La brosse 92 de lissage peut faire saillie sous le bord inférieur 91 de la lame 9.

Le cylindre 10 rotatif de dosage et de déversement des granulats vers le sol, la lame 9 de retenue de granulats et la brosse 92 de lissage de la surface périphérique extérieure 102 du cylindre 10 rotatif de dosage et de déversement des granulats s'étendent suivant la direction Y de la largeur en commun de la pluralité des plages prescrites P de largeur et de la pluralité des trappes 700.

L'ensemble 7 de distribution de granulats comporte un variateur 20 de vitesse pour faire varier la vitesse de rotation du cylindre 10 rotatif de dosage des granulats autour de son axe 101 de rotation, appelé deuxième axe 101 de rotation ci-dessous.

Le variateur 20 de vitesse fait partie d'un dispositif 110 d'entraînement en rotation du cylindre 10 rotatif de déversement des granulats vers le sol autour de son deuxième axe 101 de rotation dans le sens de rotation 103. Ce dispositif 110 d'entraînement en rotation peut comporter un moteur rotatif entraînant en rotation par une chaîne ou une courroie un pignon solidaire en rotation du cylindre 10 autour du deuxième axe 101 de rotation. Le variateur 20 de vitesse est configuré pour faire varier la vitesse de rotation du moteur, entraînant une variation de vitesse de rotation du cylindre 10 autour du deuxième axe 101 de rotation dans le sens de rotation103 dans la plage désirée de variation de vitesse de rotation de ce cylindre 10.

La surface extérieure périphérique 102 peut être circulaire en étant centrée sur le deuxième axe 101 de rotation et peut être métallique.

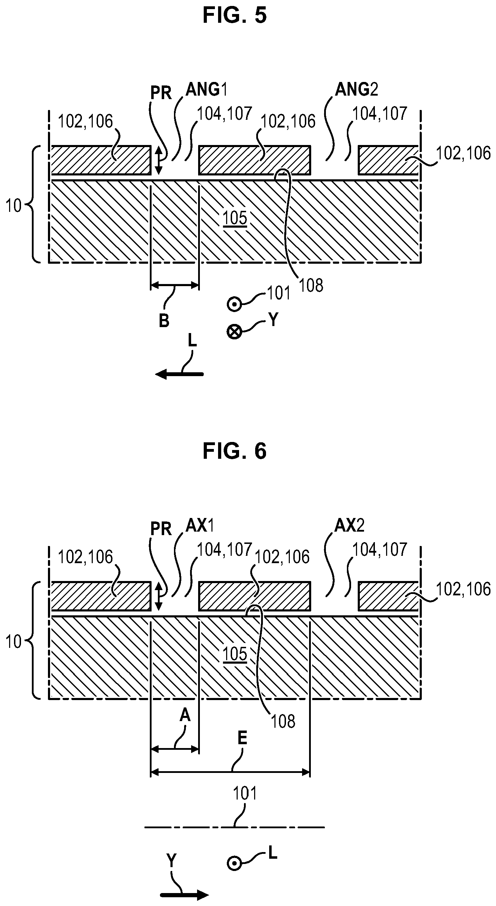

Ainsi que représenté à titre d'exemple à la figure 5, il peut y avoir plusieurs évidements 102 de réception de granulats répartis suivant plusieurs positions angulaires ANG1, ANG2 autour du deuxième axe 101 de rotation du cylindre 10 rotatif de dosage des granulats. À la figure 5, les échelles de distance ne sont pas respectées.

Ainsi que représenté à titre d'exemple à la figure 6, il peut y avoir plusieurs évidements 102 de réception de granulats répartis suivant plusieurs positions axiales AX1, AX2 le long du deuxième axe 101 de rotation du cylindre 10 rotatif de dosage des granulats. À la figure 6, les échelles de distance ne sont pas respectées.

L'ensemble 7 de distribution de granulats comporte un mécanisme 30 de contrainte relié à la lame 9 de retenue des granulats pour contraindre la brosse 92 de lissage à être appliquée contre la surface périphérique extérieure 102 du cylindre 10 rotatif de dosage des granulats, lorsque le cylindre 10 rotatif de dosage et de déversement des granulats tourne autour du deuxième axe 101 de rotation dans le sens 103 de rotation (c'est-à-dire en position de déversement des granulats vers le sol depuis le cylindre 10 rotatif de dosage). Ainsi, la brosse 92 de lissage est poussée en contact contre la surface périphérique extérieure 102 du cylindre 10 rotatif de dosage des granulats et contre les évidement 104 de celle-ci par le mécanisme 30 de contrainte.

Ainsi, les granulats envoyés par chaque trappe 700 en position ouverte tombent sur le cylindre 10 de dosage des granulats mis en rotation dans le sens 103 de rotation, puis sont plaqués par la brosse 92 de lissage dans les évidements 104 de réception de granulats de la surface périphérique extérieure 102 du cylindre 10 et remplissent les évidements 104 de réception de granulats de la surface périphérique extérieure 102 du cylindre 10 en aval de la brosse 92 de lissage. La brosse 92 de lissage et la lame 9 de retenue des granulats empêchent les granulats d'être entraînés au-dessus de la surface périphérique extérieure 102 du cylindre 10 et repoussent vers l'arrière (c'est-à-dire à l'encontre du sens 103 de rotation) les granulats situés au-dessus de la surface périphérique extérieure 102 du cylindre 10 dans le sens 103 de rotation. Ainsi, le débit de granulats vers le sol est contrôlé par la vitesse de rotation du cylindre 10 et peut être modifié d'une manière précise par le variateur 20 de vitesse. Plus la vitesse de rotation du cylindre 10 de dosage dans le sens 103 de rotation est grande, plus le dosage des granulats déversés par ce cylindre 10 de dosage est grand. L'invention peut être prévue pour une granulométrie des granulats supérieure ou égale à 0.2 mm et inférieure ou égale à 0.6 mm.

La brosse 92 de lissage peut être en un matériau déformable, ou plus déformable que la surface périphérique extérieure 102 du cylindre 10 rotatif de dosage des granulats. Cela permet de ne laisser aucun interstice entre la brosse 92 de lissage et la surface périphérique extérieure 102 du cylindre 10 rotatif de dosage des granulats.

Le conduit 702 de passage des granulats est délimité vers le bas par une paroi inférieure 703 (par exemple une tôle métallique 703) descendant vers le cylindre 10 de déversement des granulats et est délimité vers le haut par une paroi supérieure 704. Le cylindre 10 de dosage et de déversement des granulats est mis en rotation autour du deuxième axe 101 de rotation de l'ensemble 7 de distribution de granulats dans le sens 103 de rotation uniquement pendant les phases d'épandage des granulats. Cela permet des arrêts et des démarrages nets, sans après coulant des granulats.

Suivant un mode de réalisation de l'invention, le mécanisme 30 de contrainte comporte un (ou plusieurs) levier mené 12, qui est apte à tourner autour d'un premier axe 120 de rotation s'étendant suivant la direction Y de largeur. La lame 9 de retenue des granulats est fixée au(x) levier(s) mené(s) 12. La lame 9 de retenue des granulats et la brosse 92 de lissage sont situées à une première distance non nulle du premier axe 120 de rotation. Le mécanisme 30 de contrainte comporte un (ou plusieurs) vérin 32 pour pousser le (ou les) levier mené 12, pour que la brosse 92 de lissage soit appliquée contre la surface périphérique extérieure 102 du cylindre 10 rotatif de dosage des granulats. Il peut être prévu plusieurs leviers menés 12, qui sont éloignés les uns des autres le long de la direction Y de largeur et entre lesquels se trouvent une trappe 700, plusieurs trappes 700 ou toutes les trappes 700), ce qui permet de renforcer la structure et de garantir le parallélisme de la lame 9 par rapport au cylindre 10 de dosage de granulats. Le vérin 32 est distinct des vérins 709. Il peut être prévu un vérin 152 sur chacun des leviers menés 12. Le premier axe 120 de rotation est parallèle au deuxième axe 101 de rotation et à distance non nulle de du deuxième axe 101 de rotation.

Suivant un mode de réalisation de l'invention, le vérin 32 comporte une tige 321 montée coulissante d'une manière commandable par rapport à un fût 322 du vérin 32. La tige 321 a son extrémité située hors du fût 322, qui est reliée par une articulation (boulonnage ou autre) à une partie du levier mené 12, laquelle est située à une quatrième distance non nulle par rapport au premier axe 120 de rotation. Le fût 322 du vérin 32 (par exemple l'extrémité 326 du fût 322 du vérin 32, qui est la plus éloignée de l'extrémité 323 de la tige 321) est relié par une autre articulation 325 (boulonnage ou autre) à un troisième axe 327 de rotation prévu dans l'ensemble 7 de distribution de granulats. Le vérin 32 peut comporter une vis à billes pour garantir l'absence de dérive du déplacement du vérin 32. Le vérin 32 (et donc le mécanisme 30 de contrainte) peut être par exemple électrique. Le vérin 32 (et donc le mécanisme 30 de contrainte) pourrait également, dans d'autres modes de réalisation, être hydraulique ou pneumatique, ou autre. Le vérin 32 est distinct des vérins 09.

Suivant un mode de réalisation de l'invention, représenté à titre d'exemple aux figures 5 et 6, la surface périphérique extérieure 102 du cylindre 10 rotatif de dosage des granulats comporte un rouleau cylindrique rotatif 105 et une tôle 106 fixée sur le rouleau cylindrique rotatif 105. La tôle 106 forme la surface extérieure périphérique 102 du cylindre 10 rotatif de dosage des granulats et comporte des perforations 107 formant les évidements 104 de réception des granulats. Les perforations 107 peuvent être traversantes dans la tôle 106, le rouleau cylindrique rotatif 105 ayant dans ce cas une surface extérieure périphérique 108 lisse (ou pleine), sur laquelle se trouve la tôle 106 et qui forme le fond des perforations 107. La tôle 106 peut être circulaire en étant centrée sur le deuxième axe 101 de rotation et peut être métallique. Le rouleau 105 peut être circulaire en étant centrée sur le deuxième axe 101 de rotation et peut être métallique.

Ainsi que représenté à titre d'exemple à la figure 5, il peut y avoir plusieurs perforations 107 de réception de granulats répartis suivant plusieurs positions angulaires ANG1, ANG2 autour du deuxième axe 101 de rotation du cylindre 10 rotatif de dosage des granulats. À la figure 5, les échelles de distance ne sont pas respectées.

Ainsi que représenté à titre d'exemple à la figure 6, il peut y avoir plusieurs perforations 107 de réception de granulats répartis suivant plusieurs positions axiales AX1, AX2 le long du deuxième axe 101 de rotation du cylindre 10 rotatif de dosage des granulats. À la figure 6, les échelles de distance ne sont pas respectées.

Les évidements 104 de réception de granulats du cylindre 10 rotatif de dosage peuvent avoir des dimensions adaptées à une granulométrie des granulats, supérieure ou égale à 0.2 mm et inférieure ou égale à 0.6 mm, selon les modes de réalisation de l'invention, décrits ci-dessous.

Suivant un mode de réalisation de l'invention, les évidements 104 de réception de granulats du cylindre 10 rotatif de dosage peuvent avoir une profondeur PR supérieure ou égale à 0,5 mm et inférieure ou égale à 1 mm ou 2 mm dans sa surface périphérique extérieure 102, par exemple pour une granulométrie des granulats, supérieure ou égale à 0.2 mm et inférieure ou égale à 0.6 mm.

Suivant un mode de réalisation de l'invention, les évidements 104 de réception de granulats du cylindre 10 rotatif de dosage peuvent avoir un écartement E entre eux le long de l'axe 101 de rotation (c'est-à-dire dans la direction Y de la largeur) supérieure ou égale à 1 mm et inférieur ou égale à 1 cm dans sa surface périphérique extérieure 102, par exemple pour une granulométrie des granulats, supérieure ou égale à 0.2 mm et inférieure ou égale à 0.6 mm.

Suivant un mode de réalisation de l'invention, les évidements 104 de réception de granulats du cylindre 10 rotatif de dosage peuvent avoir une forme circulaire sur la surface périphérique extérieure 102. Bien entendu, les évidements 104 de réception de granulats du cylindre 10 rotatif de dosage peuvent avoir une autre forme, comme par exemple rectangulaire ou autre sur la surface périphérique extérieure 102.

Suivant un mode de réalisation de l'invention, les évidements 104 de réception de granulats du cylindre 10 rotatif de dosage peuvent avoir sur la surface périphérique extérieure 102 transversalement à leur profondeur leur plus grande dimension (par exemple leur diamètre pour une forme circulaire des évidements 104) supérieure ou égale à 1 mm et inférieure ou égale à 5 mm, par exemple pour une granulométrie des granulats, supérieure ou égale à 0.2 mm et inférieure ou égale à 0.6 mm.

Suivant un mode de réalisation de l'invention, les évidements 104 de réception de granulats du cylindre 10 rotatif de dosage peuvent avoir sur la surface périphérique extérieure 102, transversalement à leur profondeur, leur longueur A le long de l'axe 101 de rotation (par exemple leur diamètre pour une forme circulaire des évidements 104) supérieure ou égale à 1 mm et inférieure ou égale à 5 mm, par exemple pour une granulométrie des granulats, supérieure ou égale à 0.2 mm et inférieure ou égale à 0.6 mm.

Suivant un mode de réalisation de l'invention, les évidements 104 de réception de granulats du cylindre 10 rotatif de dosage peuvent avoir sur la surface périphérique extérieure 102, transversalement à leur profondeur, leur largeur B autour de l'axe 101 de rotation (par exemple leur diamètre pour une forme circulaire des évidements 104) supérieure ou égale à 1 mm et inférieure ou égale à 5 mm, par exemple pour une granulométrie des granulats, supérieure ou égale à 0.2 mm et inférieure ou égale à 0.6 mm.

Suivant un mode de réalisation de l'invention, les évidements 104 de réception de granulats du cylindre 10 rotatif de dosage peuvent avoir sur la surface périphérique extérieure 102 une densité des évidements 104, qui est supérieure ou égale à 5 % et inférieure ou égale à 50 %, notamment supérieure ou égale à 20 % et inférieure ou égale à 40 %, par exemple pour une granulométrie des granulats, supérieure ou égale à 0.2 mm et inférieure ou égale à 0.6 mm.

Suivant un mode de réalisation de l'invention, la surface extérieure 102 du cylindre 10 a un rayon par rapport à l'axe 101 de rotation, qui est supérieur ou égal à 50 mm et qui est inférieur ou égale à 500 mm, par exemple pour une granulométrie des granulats, supérieure ou égale à 0.2 mm et inférieure ou égale à 0.6 mm.

Par exemple, pour une granulométrie des granulats, supérieure ou égale à 0.2 mm et inférieure ou égale à 0.6 mm, les évidements 104 de réception de forme circulaire sur la surface périphérique extérieure 102 ont une profondeur PR de 1 mm, un écartement E de 5 mm entre eux le long de l'axe 101 de rotation, un diamètre (A ou B) de 4 mm, une densité des évidements 104, égale à 30 %, pour un rayon de la surface extérieure 102 du cylindre 10 par rapport à l'axe 101 de rotation, égal à 160 mm.

Suivant un mode de réalisation de l'invention, le dosage massique des granulats déversés vers le sol depuis le cylindre 10 rotatif de dosage est proportionnel à la vitesse de rotation du cylindre 10 rotatif de dosage des granulats, imposée par le variateur 20 de vitesse.

Suivant un mode de réalisation de l'invention, la vitesse de rotation du cylindre 10 autour de son axe 101 de rotation est supérieure ou égale à 20 tours par minute et inférieure ou égale à 80 tours par minute, notamment supérieure ou égale à 40 tours par minute et inférieure ou égale à 60 tours par minute, la densité des évidements 104 est supérieure ou égale à 5 % et inférieure ou égale à 50 %, notamment supérieure ou égale à 20 % et inférieure ou égale à 40 %, par exemple pour une granulométrie des granulats, supérieure ou égale à 0.2 mm et inférieure ou égale à 0.6 mm.

Suivant un mode de réalisation de l'invention, le variateur 20 de vitesse est agencé pour faire varier la vitesse de rotation du cylindre 10 rotatif de dosage des granulats, de manière à ce que le dosage des granulats vers le sol depuis le cylindre 10 rotatif de dosage des granulats puisse varier de 200 à 300 grammes de granulats par m² de sol pour une granulométrie des granulats supérieure ou égale à 0.2 mm et inférieure ou égale à 0.6 mm. Cela peut être le cas par exemple pour une vitesse d'avancée de l'unité mobile, égale à 5 km/h, une vitesse de rotation du cylindre 10 autour de son deuxième axe 101 de rotation, supérieure ou égale à 40 tours par minute et inférieure ou égale à 60 tours par minute, un rayon de la surface extérieure 102 du cylindre 10 par rapport au deuxième axe 101 de rotation, égal à 160 mm, et une densité des perforations 107 (évidements 104), égale à 30 %.

Suivant un mode de réalisation de l'invention, représenté à titre d'exemple aux figures 4, 7 et 8, l'ensemble 7 de distribution de granulats comporte une traverse 17 de butée pour la butée haute des trappes 700 dans leur position ouverte, représenté à titre d'exemple aux figures 4, 5, 7 et 8. La traverse 17 de butée s'étend sur la largeur totale déterminée Lmax des trappes 700 ou sur plus de la largeur totale déterminée Lmax des trappes 700. Dans leur position fermée, les trappes 700 sont éloignées de la traverse 17 de butée. Dans sa position ouverte, le bras 714 de la trappe 700 bute contre la traverse 17 de butée. Le bras 714 peut comporter dans sa partie supérieure, tournée vers la traverse 17 de butée, une encoche 713 ayant une forme complémentaire (par exemple ayant deux bords rectilignes à angle droit) par rapport à celle de la traverse 17 de butée (pouvant être par exemple de section rectangulaire ou carrée).

Suivant un mode de réalisation de l'invention, représenté à titre d'exemple aux figures 4, 7 et 8, la traverse 17 de butée est indépendante de la lame 9 de retenue de granulats. Cela permet de ne pas avoir de perturbations, telles que des déformations mécaniques, lors de l'ouverture et de la fermeture des trappes 700.

Suivant un mode de réalisation de l'invention, représenté à titre d'exemple aux figures 4, 7 et 8, les trappes 700 sont aptes à passer entre l'une et l'autre de la position ouverte de la position fermée par rotation autour du premier axe 120 de rotation du levier mené 12, ce premier axe 120 de rotation étant donc commun à la pluralité des trappes 700 et à la pluralité des plages prescrites P.

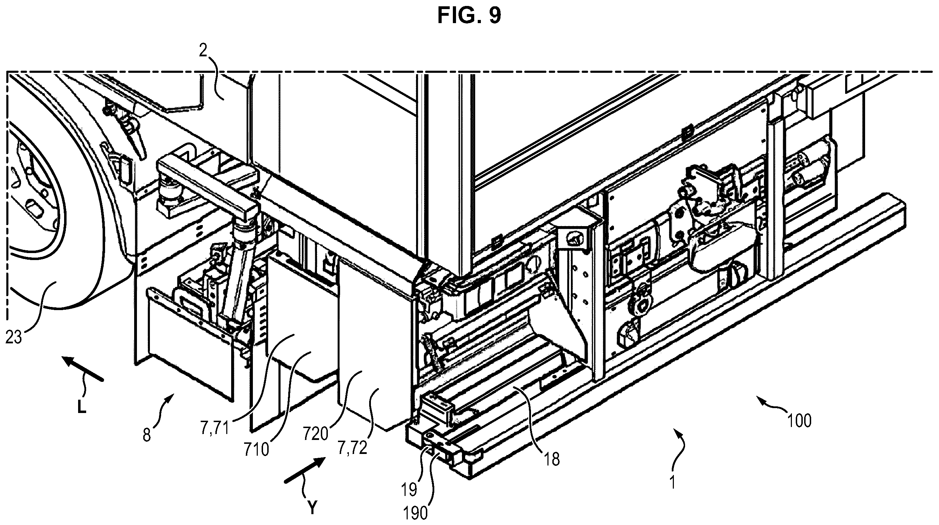

Suivant un mode de réalisation de l'invention, représenté à titre d'exemple à la figure 9, l'ensemble 7 de distribution de granulats comporte une barre arrière 18 s'étendant suivant la direction Y de la largeur. Le châssis 2 comporte une (ou plusieurs) roulette 19 (ou dispositif de roulement 19), qui est en appui contre et derrière la barre arrière 18. La barre arrière 18 définit un plan d'appui pour la roulette 19 ou le dispositif de roulement 19. Cela permet d'amortir ou de supprimer les vibrations de l'ensemble 7 de distribution de granulats pour permettre un épandage régulier (sans vague) des granulats. La roulette 19 (ou dispositif de roulement 19) reste en appui contre la barre arrière 18 quelle que soit la position de l'ensemble 7 de distribution de granulats suivant la direction Y de la largeur. La roulette 19 (ou dispositif de roulement 19) peut avoir un ancrage ajustable 190 par rapport au châssis 2 pour permettre la reprise d'efforts.

Suivant un mode de réalisation de l'invention, représenté à titre d'exemple aux figures 4 et 5, les trappes 700 sont côte à côte le long de la direction Y de la largeur et ont sur les flancs 705 de leur volet 701, transversaux à la direction Y de la largeur, une (ou plusieurs) brosse 706 (ou balai 706 ou racloir 706 ou bavette 706) de retenue des granulats. Cela permet d'empêcher les granulats de passer entre les trappes 700. Les brosses 706 de retenue des granulats sont distinctes de la brosse 92 de lissage.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Unité mobile (1) de confection et/ou réparation d'un revêtement routier composé d'une couche de liant et d'une couche de granulats, l'unité (1) comprenant :
un châssis (2), sur lequel sont montés un récipient (3) de stockage de granulats, une cuve (4) de stockage de liant, un ensemble (8) de distribution de liant et un ensemble (7) de distribution de granulats,
l'ensemble (7) de distribution de granulats comportant une pluralité de trappes (700), qui sont réparties dans la direction (Y) de la largeur du châssis (2) sur respectivement une pluralité de plages prescrites (P) de largeur et qui sont chacune aptes à être sélectivement déplacées soit dans une position ouverte selon une commande d'épandage pour épandre des granulats vers le bas dans la plage prescrite (P) de largeur associée à la trappe (700), soit dans une position fermée selon une commande d'absence d'épandage pour ne pas épandre de granulats dans la plage prescrite (P) de largeur associée à la trappe (700),
l'ensemble (8) de distribution de liant étant apte à épandre du liant dans la plage prescrite (P) de largeur selon la commande d'épandage et à ne pas épandre de liant dans la plage prescrite (P) de largeur selon la commande d'absence d'épandage,
l'ensemble (7) de distribution de granulats comportant :
- un cylindre (10) rotatif de dosage et de déversement des granulats vers le sol, qui comporte des évidements (104) de réception de granulats et qui s'étend en commun de la pluralité des plages prescrites (P) de largeur, les évidements (104) de réception de granulats affleurant à une surface périphérique extérieure (102) du cylindre (10) rotatif de dosage et de déversement des granulats vers le sol,
- une lame (9) de retenue de granulats, s'étendant en commun de la pluralité des plages prescrites (P) de largeur, le cylindre (10) rotatif de dosage étant situé sous la lame (9),
- un dispositif (110) d'entraînement en rotation du cylindre (10) rotatif de dosage des granulats, comportant un variateur (20) de vitesse permettant de faire varier la vitesse de rotation du cylindre (10) rotatif de dosage des granulats,
**caractérisée en ce que** l'ensemble (7) de distribution de granulats comporte :
- au moins une brosse (92) de lissage de la surface périphérique extérieure (102) du cylindre (10) rotatif, qui est fixée en saillie à la lame (9) de retenue vers le cylindre (10) rotatif de dosage et qui s'étend en commun de la pluralité des plages prescrites (P) de largeur, la lame (9) de retenue s'étendant en aval de la pluralité des trappes (700),
- un mécanisme (30) de contrainte relié à la lame (9) de retenue pour que la brosse (92) de lissage soit appliquée contre la surface périphérique extérieure (102) du cylindre (10) rotatif de dosage des granulats en position de déversement des granulats vers le sol depuis le cylindre (10) rotatif de dosage.

2. Unité suivant la revendication 1, **caractérisée en ce que** les évidements (104) de réception de granulats sont répartis suivant plusieurs positions angulaires (ANG1, ANG2) autour d'un deuxième axe (101) de rotation du cylindre (10) rotatif de dosage et de déversement des granulats.

3. Unité suivant la revendication 1 ou 2, **caractérisée en ce que** les évidements (104) de réception de granulats sont répartis suivant plusieurs positions axiales (AX1, AX2) le long d'un deuxième axe (101) de rotation du cylindre (10) rotatif de dosage et de déversement des granulats.

4. Unité suivant l'une quelconque des revendications précédentes, **caractérisée en ce que** le mécanisme (30) de contrainte comporte au moins un levier mené (12), qui est apte à tourner autour d'un premier axe (120) de rotation et sur lequel est fixée la lame (9) située à une première distance non nulle du premier axe (120) de rotation,
un vérin (32) de poussée du levier mené (12), pour que la brosse (92) de lissage soit appliquée contre la surface périphérique extérieure (102) du cylindre (10) rotatif de dosage des granulats.

5. Unité suivant l'une quelconque des revendications précédentes, **caractérisée en ce que** la brosse (92) de lissage fait saillie sous un bord inférieur (91) de la lame (9) de retenue de granulats.

6. Unité suivant l'une quelconque des revendications précédentes, **caractérisée en ce que** la surface périphérique extérieure (102) du cylindre (10) rotatif de dosage des granulats comporte un rouleau cylindrique rotatif (105) et une tôle (106), qui forme la surface extérieure périphérique (102) du cylindre (10) rotatif de dosage des granulats, qui comporte des perforations (107) formant les évidements (104) de réception des granulats et qui est fixée sur le rouleau cylindrique rotatif (105).

7. Unité suivant l'une quelconque des revendications précédentes, **caractérisée en ce que** les évidements (104) de réception de granulats du cylindre (10) rotatif de dosage ont une profondeur inférieure ou égale à 1 mm dans sa surface périphérique extérieure (102).

8. Unité suivant l'une quelconque des revendications précédentes, **caractérisée en ce que** le dosage massique des granulats déversés vers le sol depuis le cylindre (10) rotatif de dosage est proportionnel à la vitesse de rotation du cylindre (10) rotatif de dosage des granulats, imposée par le variateur (20) de vitesse.

9. Unité suivant l'une quelconque des revendications précédentes, **caractérisée en ce que** pour une granulométrie des granulats supérieure ou égale à 0.2 mm et inférieure ou égale à 0.6 mm, les évidements (104) de réception de granulats du cylindre (10) rotatif de dosage ont une profondeur (PR) supérieure ou égale à 0,5 mm et inférieure ou égale à 1 mm ou 2 mm dans la surface périphérique extérieure (102), et/ou un écartement (E ) entre eux le long de l'axe (101) de rotation du cylindre (10) rotatif de dosage, supérieure ou égale à 1 mm et inférieur ou égale à 1 cm dans la surface périphérique extérieure (102), et/ou, transversalement à leur profondeur, leur plus grande dimension supérieure ou égale à 1 mm et inférieure ou égale à 5 mm, et/ou, transversalement à leur profondeur, leur longueur (A) le long de l'axe (101) de rotation du cylindre (10) rotatif de dosage, supérieure ou égale à 1 mm et inférieure ou égale à 5 mm, et/ou, transversalement à leur profondeur, leur largeur (B) autour de de l'axe (101) de rotation du cylindre (10) rotatif de dosage, supérieure ou égale à 1 mm et inférieure ou égale à 5 mm, et/ou sur la surface périphérique extérieure (102) une densité des évidements (104), qui est supérieure ou égale à 5 % et inférieure ou égale à 50 %, notamment supérieure ou égale à 20 % et inférieure ou égale à 40 % et/ou la surface périphérique extérieure (102) du cylindre (10) rotatif de dosage a un rayon par rapport à son axe (101) de rotation, qui est supérieur ou égal à 50 mm et qui est inférieur ou égale à 500 mm.

10. Unité suivant l'une quelconque des revendications précédentes, **caractérisée en ce que**, en mode d'utilisation de l'unité, la vitesse de rotation du cylindre (10) autour de son axe (101) de rotation est supérieure ou égale à 20 tours par minute et inférieure ou égale à 80 tours par minute, notamment supérieure ou égale à 40 tours par minute et inférieure ou égale à 60 tours par minute, pour une granulométrie des granulats supérieure ou égale à 0.2 mm et inférieure ou égale à 0.6 mm.

11. Unité suivant l'une quelconque des revendications précédentes, **caractérisée en ce que** l'ensemble (7) de distribution de granulats comporte une traverse (17) de butée pour la butée haute de la pluralité des trappes (700) dans leur position ouverte.

12. Unité suivant la revendication 11, **caractérisée en ce que** la pluralité des trappes (700) occupe une largeur totale déterminée (Lmax),
la traverse (17) de butée s'étendant au moins sur la largeur totale déterminée (Lmax) de la pluralité des trappes (700).

13. Unité suivant l'une quelconque des revendications précédentes, lorsqu'elles dépendent au moins de la revendication 4, **caractérisée en ce que** les trappes (700) sont aptes à passer entre l'une et l'autre de la position ouverte de la position fermée par rotation autour du premier axe (120) de rotation.

14. Unité suivant l'une quelconque des revendications précédentes, **caractérisée en ce que** l'ensemble (7) de distribution de granulats comporte une barre arrière (18) s'étendant suivant la direction (Y) de la largeur, le châssis (2) comporte au moins une roulette (19), qui est en appui contre et derrière la barre arrière (18), un ancrage (190) ajustable de la roulette (19) par rapport au châssis (2) étant prévu.

15. Unité suivant l'une quelconque des revendications précédentes, **caractérisée en ce que** les trappes (700) sont côte à côte le long de la direction (Y) de la largeur et ont, sur leurs flancs (705) transversaux à la direction (Y) de la largeur, des deuxièmes brosses (706) de retenue des granulats.

## Patentansprüche

1. Mobile Einheit (1) zur Herstellung und/oder Reparatur eines Straßenbelags, der aus einer Bindemittelschicht und einer Granulatschicht zusammengesetzt ist, wobei die Einheit (1) umfasst:
ein Fahrgestell (2), auf dem ein Granulatlagerbehälter (3), ein Bindemittellagertank (4), eine Bindemittelverteileranordnung (8) und eine Granulatverteileranordnung (7) angebracht sind,
wobei die Granulatverteileranordnung (7) eine Vielzahl von Klappen (700) aufweist, die in der Richtung (Y) der Breite des Fahrgestells (2) über jeweils eine Vielzahl vorgegebener Breitenbereiche (P) verteilt sind und die jeweils selektiv entweder nach einem Streubefehl in eine offene Position, um Granulat nach unten in den der Klappe (700) zugeordneten Breitenbereich (P) zu streuen, oder nach einem Nicht-Streubefehl in eine geschlossene Position bewegbar sind, um kein Granulat in den der Klappe (700) zugeordneten Breitenbereich (P) zu streuen,
wobei die Bindemittelverteileranordnung (8) imstande ist, gemäß dem Streubefehl Bindemittel in den vorgegebenen Breitenbereich (P) zu streuen und gemäß dem Nicht-Streubefehl kein Bindemittel in den vorgegebenen Breitenbereich (P) zu streuen,
wobei die Granulatverteileranordnung (7) aufweist:
- einen drehenden Zylinder (10) zum Dosieren und Abgeben des Granulats auf den Boden, der Granulataufnahmeaussparungen (104) umfasst, und der sich gemeinsam mit der Vielzahl vorgeschriebener Breitenbereiche (P) erstreckt, wobei die Granulataufnahmeaussparungen (104) bündig mit einer Außenumfangsfläche (102) des drehenden Zylinders (10) zum Dosieren und Abgeben des Granulats auf den Boden abschließen,
- eine Granulatrückhalteleiste (9), die sich gemeinsam mit der Vielzahl der vorgegebenen Breitenbereiche (P) erstreckt, wobei sich der drehende Dosierzylinder (10) unterhalb der Leiste (9) befindet,
- eine Drehantriebsvorrichtung (110) für den drehende Granulatdosierzylinder (10), die einen Drehzahlregler (20) umfasst, der gestattet, die Drehzahl des drehenden Granulatdosierzylinders (10) zu regeln,
**dadurch gekennzeichnet, dass** die Granulatverteileranordnung (7) aufweist:
- mindestens eine Glättbürste (92) für die Außenumfangsfläche (102) des drehenden Zylinders (10), die an der Rückhalteleiste (9) zum drehenden Dosierzylinder (10) hin vorstehend befestigt ist und die sich gemeinsam mit der Vielzahl der vorgegebenen Breitenbereiche (P) erstreckt, wobei sich die Rückhalteleiste (9) zu der Vielzahl der Klappen (700) nachgelagert erstreckt,
- einen Druckmechanismus (30), der mit der Rückhalteleiste (9) verbunden ist, damit die Glättbürste (92) in der Position, in der das Granulat aus dem drehenden Dosierzylinder (10) auf den Boden abgegeben wird, gegen die äußere Umfangsfläche (102) des drehenden Granulatdosierzylinders (10) gedrückt wird.

2. Einheit nach Anspruch 1, **dadurch gekennzeichnet, dass** die Granulataufnahmeaussparungen (104) in mehreren Winkelpositionen (ANG1, ANG2) um eine zweite Drehachse (101) des drehenden Granulatdosier- und Abgabezylinders (10) verteilt sind.

3. Einheit nach Anspruch 1 oder 2, **dadurch gekennzeichnet, dass** die Granulataufnahmeaussparungen (104) in mehreren axialen Positionen (AX1, AX2) entlang einer zweiten Drehachse (101) des drehenden Dosier- und Abgabezylinders (10) verteilt sind.

4. Einheit nach einem beliebigen der vorstehenden Ansprüche, **dadurch gekennzeichnet, dass** der Druckmechanismus (30) mindestens einen geführten Hebel (12) aufweist, der um eine erste Drehachse (120) drehbar ist und an dem die Leiste (9) in einem ersten Abstand von nicht null von der ersten Drehachse (120) befestigt ist,
einen Druckzylinder (32) des geführten Hebels (12), damit die Glättbürste (92) gegen die Außenumfangsfläche (102) des drehenden Granulatdosierzylinders (10) gedrückt wird.

5. Einheit nach einem beliebigen der vorstehenden Ansprüche, **dadurch gekennzeichnet, dass** die Glättbürste (92) unter einer Unterkante (91) der Granulatrückhalteleiste (9) hervorsteht.

6. Einheit nach einem beliebigen der vorstehenden Ansprüche, **dadurch gekennzeichnet, dass** die Außenumfangsfläche (102) des drehenden Granulatdosierzylinders (10) eine drehende Zylinderwalze (105) und ein Blech (106) aufweist, das die Außenumfangsfläche (102) des drehenden Granulatdosierzylinders (10) bildet, das Perforationen (107) aufweist, die die Granulataufnahmeaussparungen (104) bilden und das an der drehenden Zylinderwalze (105) befestigt ist.

7. Einheit nach einem beliebigen der vorstehenden Ansprüche, **dadurch gekennzeichnet, dass** die Granulataufnahmeaussparungen (104) des drehenden Dosierzylinders (10) in seiner Außenumfangsfläche (102) eine Tiefe von weniger oder gleich 1 mm aufweisen.

8. Einheit nach einem beliebigen der vorstehenden Ansprüche, **dadurch gekennzeichnet, dass** die Massendosierung der aus dem drehenden Dosierzylinder (10) auf den Boden abgegebenen Granulate proportional zur Drehzahl des drehenden Granulatdosierzylinders (10) ist, die durch den Drehzahlregler (20) vorgegeben wird.

9. Einheit nach einem beliebigen der vorstehenden Ansprüche, **dadurch gekennzeichnet, dass** bei einer Korngröße der Granulate größer oder gleich 0,2 mm und kleiner oder gleich 0,6 mm die Granulataufnahmeaussparungen (104) des drehenden Dosierzylinders (10) eine Tiefe (PR) von größer oder gleich 0,5 mm und kleiner oder gleich 1 mm oder 2 mm in der Außenumfangsfläche (102) haben und/oder einen Abstand (E) voneinander entlang der Drehachse (101) des drehenden Dosierzylinders (10) größer oder gleich 1 mm und kleiner oder gleich 1 cm in der Außenumfangsfläche (102) haben und/oder quer zu ihrer Tiefe, ihre größte Abmessung größer oder gleich 1 mm und kleiner oder gleich 5 mm haben, und/oder quer zu ihrer Tiefe ihre Länge (A) entlang der Drehachse (101) des drehenden Dosierzylinders (10) größer oder gleich 1 mm und kleiner oder gleich 5 mm haben, und/oder quer zu ihrer Tiefe ihre Breite (B) um die Drehachse (101) des drehenden Dosierzylinders (10) größer oder gleich 1 mm und kleiner oder gleich 5 mm haben, und/oder auf der Außenumfangsfläche (102) eine Dichte der Aussparungen (104), die größer oder gleich 5% und kleiner oder gleich 50% ist, insbesondere größer oder gleich 20% und kleiner oder gleich 40%, haben und/oder die Außenumfangsfläche (102) des drehenden Dosierzylinders (10) einen Radius relativ zu seiner Drehachse (101) hat, der größer oder gleich 50 mm ist und der kleiner oder gleich 500 mm ist.

10. Einheit nach einem beliebigen der vorstehenden Ansprüche, **dadurch gekennzeichnet, dass** im Betriebsmodus der Einheit die Drehzahl des Zylinders (10) um seine Drehachse (101) größer oder gleich 20 Umdrehungen pro Minute und kleiner oder gleich 80 Umdrehungen pro Minute, insbesondere größer oder gleich 40 Umdrehungen pro Minute und kleiner oder gleich 60 Umdrehungen pro Minute ist, bei einer Korngröße der Granulate größer oder gleich 0,2 mm und kleiner oder gleich 0,6 mm.

11. Einheit nach einem beliebigen der vorstehenden Ansprüche, **dadurch gekennzeichnet, dass** die Granulatverteileranordnung (7) einen Anschlagquerträger (17) für den oberen Anschlag der Vielzahl von Klappen (700) in ihrer geöffneten Position aufweist.

12. Einheit nach Anspruch 11, **dadurch gekennzeichnet, dass** die Vielzahl von Klappen (700) eine bestimmte Gesamtbreite (Lmax) einnimmt,
wobei sich der Anschlagquerträger (17) mindestens über die bestimmte Gesamtbreite (Lmax) der Vielzahl von Klappen (700) erstreckt.

13. Einheit nach einem beliebigen der vorstehenden Ansprüche, wenn sie mindestens von Anspruch 4 abhängen, **dadurch gekennzeichnet, dass** die Klappen (700) durch Drehung um die erste Drehachse (120) zwischen der offenen und der geschlossenen Position wechseln können.

14. Einheit nach einem beliebigen der vorstehenden Ansprüche, **dadurch gekennzeichnet, dass** die Granulatverteileranordnung (7) eine sich in Richtung der Breite (Y) erstreckende hintere Stange (18) aufweist, das Fahrgestell (2) mindestens ein Rad (19) aufweist, das an der hinteren Stange (18) und hinter dieser anliegt, wobei eine verstellbare Verankerung (190) des Rades (19) relativ zum Fahrgestell (2) vorgesehen ist.

15. Einheit nach einem beliebigen der vorstehenden Ansprüche, **dadurch gekennzeichnet, dass** die Klappen (700) nebeneinander entlang der Breitenrichtung (Y) angeordnet sind und an ihren zur Breitenrichtung (Y) quer verlaufenden Flanken (705) zweite Granulat-Rückhaltebürsten (706) aufweisen.

## Claims

1. Mobile unit (1) for making and/or repairing a road surface composed of a layer of binder and a layer of aggregates, the unit (1) comprising:
a chassis (2), on which are mounted an aggregate storage container (3), a binder storage tank (4), a binder distribution assembly (8) and an aggregate distribution assembly (7),
the aggregate distribution assembly (7) comprising a plurality of hatches (700), which are distributed in the width direction (Y) of the frame (2) over a plurality of prescribed width ranges (P) respectively and which are each capable of being selectively moved either into an open position according to a spreading command in order to spread aggregate downwards in the prescribed width range (P) associated with the hatch (700) or in a closed position according to a no-spreading command so as not to spread aggregates within the prescribed range (P) of width associated with the hatch (700),
the binder distribution assembly (8) being capable of spreading binder in the prescribed range (P) of width according to the spreading command and of not spreading binder in the prescribed range (P) of width according to the no-spreading command,
the aggregate distribution assembly (7) comprising:
- a rotating cylinder (10) for dosing and discharging aggregates to the ground, which has aggregate-receiving recesses (104) and which extends in common over the plurality of prescribed width ranges (P), the aggregate-receiving recesses (104) being flush with an outer peripheral surface (102) of the rotating cylinder (10) for dosing and discharging aggregates to the ground,
- a blade (9) for retaining aggregates, extending in common with the plurality of prescribed width ranges (P), the rotary dosing cylinder (10) being located under the blade (9),
- a device (110) for rotating the rotary aggregate dosing cylinder (10), comprising a speed variator (20) for varying the speed of rotation of the rotary aggregate dosing cylinder (10),
**characterised in that** the aggregate distribution assembly (7) comprises:
- at least one brush (92) for smoothing the outer peripheral surface (102) of the rotating cylinder (10), wherein the brush (92) is attached to the retaining blade (9) and projects towards the rotary dosing cylinder (10), wherein the brush (92) extends in common with the plurality of prescribed width ranges (P), the retaining blade (9) extending downstream of the plurality of hatches (700),
- a constraint mechanism (30) connected to the retaining blade (9) so that the smoothing brush (92) is applied against the outer peripheral surface (102) of the rotating aggregate dosing cylinder (10) in the position of discharging the aggregate towards the ground from the rotating dosing cylinder (10).

2. Unit as claimed in claim 1, **characterised in that** the aggregate-receiving recesses (104) are distributed in a plurality of angular positions (ANG1, ANG2) about a second axis (101) of rotation of the rotary aggregate dosing and discharge cylinder (10).

3. Unit as claimed in claim 1 or 2, **characterised in that** the aggregate-receiving recesses (104) are distributed in a plurality of axial positions (AX1, AX2) along a second axis (101) of rotation of the rotating aggregate dosing and discharge cylinder (10).

4. Unit according to any one of the preceding claims, **characterised in that** the constraint mechanism (30) comprises at least one driven lever (12), which is able to rotate about a first axis (120) of rotation and to which is fixed the blade (9) situated at a first non-zero distance from the first axis (120) of rotation,
a jack (32) for pushing the driven lever (12), so that the smoothing brush (92) is applied against the outer peripheral surface (102) of the rotating aggregate dosing cylinder (10).

5. A unit according to any one of the preceding claims, **characterised in that** the smoothing brush (92) projects below a lower edge (91) of the aggregate retaining blade (9).

6. Unit according to any one of the preceding claims, **characterised in that** the outer peripheral surface (102) of the rotating aggregate dosing cylinder (10) comprises a rotating cylindrical roller (105) and a sheet (106) which forms the outer peripheral surface (102) of the rotating aggregate dosing cylinder (10), which comprises perforations (107) forming the aggregate receiving recesses (104) and which is fixed to the rotating cylindrical roller (105).

7. Unit according to any one of the preceding claims, **characterised in that** the aggregate-receiving recesses (104) of the rotary dosing cylinder (10) have a depth of less than or equal to 1 mm in its outer peripheral surface (102).

8. Unit according to any one of the preceding claims, **characterised in that** the mass dosing of the aggregates discharged towards the ground from the rotary dosing cylinder (10) is proportional to the speed of rotation of the rotary aggregate dosing cylinder (10), imposed by the variable speed drive (20).

9. Unit according to any one of the preceding claims, **characterised in that** for a particle size of the aggregates greater than or equal to 0.2 mm and less than or equal to 0.6 mm, the aggregate-receiving recesses (104) of the rotating dosing cylinder (10) have a depth (PR) greater than or equal to 0.5 mm and less than or equal to 1 mm or 2 mm in the outer peripheral surface (102), and/or a spacing (E ) between them along the axis (101) of rotation of the rotating dosing cylinder (10), greater than or equal to 1 mm and less than or equal to 1 cm in the outer peripheral surface (102), and/or, transversely to their depth, their largest dimension greater than or equal to 1 mm and less than or equal to 5 mm, and/or, transversely to their depth, their length (A) along the axis (101) of rotation of the rotary dosing cylinder (10), greater than or equal to 1 mm and less than or equal to 5 mm, and/or, transversely to their depth, their width (B) around the axis (101) of rotation of the rotary dosing cylinder (10), greater than or equal to 1 mm and less than or equal to 5 mm, and/or on the outer peripheral surface (102) a density of the recesses (104), which is greater than or equal to 5% and less than or equal to 50%, in particular greater than or equal to 20% and less than or equal to 40%, and/or the outer peripheral surface (102) of the rotating dosing cylinder (10) has a radius relative to its axis of rotation (101) which is greater than or equal to 50 mm and less than or equal to 500 mm.

10. Unit according to any one of the preceding claims, **characterised in that** in the mode of use of the unit,
the speed of rotation of the roller (10) about its axis of rotation (101) is greater than or equal to 20 revolutions per minute and less than or equal to 80 revolutions per minute, in particular greater than or equal to 40 revolutions per minute and less than or equal to 60 revolutions per minute, for a particle size of the aggregates greater than or equal to 0.2 mm and less than or equal to 0.6 mm.

11. A unit according to any one of the preceding claims, **characterised in that** the aggregate distribution assembly (7) comprises a stop cross-member (17) for the upper stop of the plurality of hatches (700) in their open position.

12. A unit as claimed in claim 11, **characterised in that** the plurality of hatches (700) occupy a determined total width (Lmax),
the stop cross-member (17) extending at least over the determined total width (Lmax) of the plurality of hatches (700).

13. Unit according to any one of the preceding claims, when dependent on at least claim 4, **characterised in that** the hatches (700) are capable of passing between one and the other of the open position and of the closed position by rotation about the first axis (120) of rotation.

14. Unit according to any one of the preceding claims, **characterised in that** the aggregate distribution assembly (7) comprises a rear bar (18) extending in the width direction (Y), the chassis (2) comprises at least one castor (19), which is supported against and behind the rear bar (18), an adjustable anchoring (190) of the castor (19) relative to the chassis (2) being provided.

15. Unit according to any one of the preceding claims, **characterised in that** the hatches (700) are side by side along the direction (Y) of the width and have, on their flanks (705) transverse to the direction (Y) of the width, second brushes (706) for retaining the aggregates.
